# EUROPEAN PATENT SPECIFICATION

(11) **EP 3 902 146 B1**
(45) Date of publication and mention of the grant of the patent: **01.11.2023**
(21) Application number: 21169960.8
(22) Date of filing: 22.04.2021
(51) Int. Cl.: H04B 1/26, H04B 1/12, H03D 7/16

(54) **MICROWAVE RECEIVER DEVICE**
MIKROWELLENEMPÄNGERVORRICHTUNG
DISPOSITIF RÉCEPTEUR À MICROONDES

(30) Priority: 23.04.2020 IT 202000008773
(43) Date of publication of application: 27.10.2021
(73) Proprietor: PICOSATS S.R.L., 34149 Trieste (IT)
(72) Inventor: Fragiacomo, Mario, 34151 Trieste (IT); Dogo, Federico, 34138 Trieste (IT); Alimenti, Federico, 06034 Foligno (PG) (IT); Mezzanotte, Paolo, 06132 Perugia (IT); Palazzi, Valentina, 06049 Spoleto (PG) (IT); Roselli, Luca, 06125 Perugia (IT)
(74) Representative: Petraz, Gilberto Luigi

(56) References cited:
- US-A- 5 649 312
- US-A1- 2020 007 084

## Description

### FIELD OF THE INVENTION

Embodiments described here concern a microwave receiver device suitable for satellite applications.

The receiver according to the invention is suitable to be used in radio telecommunication systems with high transmission speed (data rate), in particular but not exclusively on Cubesat platforms.

### BACKGROUND OF THE INVENTION

It is known that, in the manufacture of microwave receivers for Cubesat applications, it is necessary to reconcile very high performances with hardware solutions that are, at the same time, miniaturized, light and economical.

This entails, on the one hand, that components already available on the market and designed for different applications must be adopted, such as those for the automotive sector or for consumer devices, and on the other hand that consolidated manufacturing techniques must be used, such as those used in the production of multilayer boards (multi-layer PCB - Printed Circuit Boards).

It is also known that, from the electrical point of view, the main characteristics of a microwave satellite receiver concern gain and noise. Since the signals picked up by the onboard antenna are weak, it is necessary to use high gain and low noise apparatuses so that communication is intelligible.

The receiver has to process a signal in a certain frequency band and, in this regard, it is necessary to consider two aspects: the thermal noise superimposed on the signal of interest, partly picked up by the receiving antenna, and partly generated by the components of the receiver itself, and the other signals which are allocated to frequency bands different from the signal of interest. The input signal must therefore necessarily be filtered in order to isolate the useful signal from the signals in different bands, and amplified since it is generally of a very low level.

Documents US-A-2020/0007084 and US 5,649,312 describe examples of known receiver devices for satellite applications.

To process the signal, the receivers are typically based on superheterodyne architecture, which provides to distribute the amplification and filtering functions along a signal chain in which one or more frequency jumps, or conversions, are performed.

In particular, the frequency jumps or conversions are used when it is necessary to translate the spectrum of a signal into a frequency band different from the original one; for example, if you want to transmit audio signals (with low frequencies between 20 Hz - 20 kHz) by means of antennas, it is essential to convert the signals in the frequency band of the antenna (from a few hundred MHz to a few hundred GHz, or in the microwave bands and millimetric waves).

In superheterodyne architectures, the frequency to be received is superimposed by means of a mixer on that of a local oscillator with adjustable frequency. The composite signal is sent to a suitable non-linear electronic circuit in order to generate a signal with a frequency equal to the difference between the superimposed frequencies, corresponding to that of a so-called "medium frequency" circuit.

A functional element of superheterodyne architecture is the image rejection filter that must be custom designed since its characteristics depend both on the band to be received and also on the frequency jumps (intermediate frequencies) that are adopted in the receiver.

This filter is an expensive element that needs adequate shielding, generally implemented with metal cavities having a non-negligible mass.

The filter is normally inserted between the antenna and the first amplification stage, in order to reject out-of-band signals before they enter the receiver. However, this positioning is critical because, due to the attenuation of the filter inside the passband, the noise of the system increases, that is, the signal/noise ratio of the receiver worsens.

To solve the problem, it is necessary to adopt filters with a high merit factor which, however, are bulky and expensive, otherwise it is necessary to accept a reduction in the performance of the system, both in terms of noise and also in terms of rejection of signals at unwanted frequencies.

Another functionally important element of superheterodyne architecture is the low noise amplifier. This amplifier must be characterized by a high gain, usually comprised between 30 and 40 dB, in order to obviate the power losses associated with the first frequency conversion device (mixer). Since integrated microwave amplifiers exist, available on the market both in die (on the bare chip) and also in package, the most economical approach is to use these products without having to redesign them.

To obtain the above cited gain levels, however, at least two integrated circuits must be connected in cascade, each containing a multistage amplifier.

In this case, due to the parasitic electromagnetic couplings present on the electronic board on which the integrated circuits are assembled, oscillations in the amplification chain are frequently triggered, due to the involuntary feedback between input and output. To obviate the problem, known solutions provide to use shielding, by means of metal cavities, of the individual integrated circuits, with a consequent further increase in the overall mass, which, in the case of satellite applications, is an important factor.

Another disadvantage is the complexity of designing the electronic board, since it is difficult to produce models that describe the behavior of the parasitic couplings in an exhaustive manner.

Furthermore, the mechanical elements must also be adequately designed and manufactured to guarantee adequate support and electromagnetic shielding for the receiver.

There is therefore a need to perfect a microwave receiver which can overcome at least one of the disadvantages of the state of the art.

In particular, one purpose of the present invention is to provide a microwave receiver which allows to reach the electronic performances required by radio telecommunication systems with high transmission speed.

Another purpose is to provide a receiver which is efficient and at the same time less expensive than known solutions.

Another purpose is to perfect a microwave receiver which allows to obtain an optimum signal/noise ratio given by high gain and low noise.

Another purpose of the present invention is to identify miniaturized and lightweight hardware solutions which are suitable to be applied on satellite systems.

Another purpose is to maintain an optimum cost/benefit ratio.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes, embodiments described here concern a microwave receiver that overcomes the limits of the state of the art and eliminates the defects present therein.

This microwave receiver is suitable to detect and process at input electrical signals in the microwave frequency band, in radio telecommunication systems with high transmission speed (data rate). These signals can be supplied by an antenna for receiving the radio signal.

According to some embodiments, the microwave receiver comprises an electronic board, at least one multistage amplifier and an image rejection filter.

The electronic board can be a single-layer support or a multi-layer support (multi-layer PCB), each layer comprising a dielectric substrate and possibly one or more metal planes, or layers, in correspondence with the lower and/or upper surface of the dielectric substrate.

According to preferred embodiments, the support is multilayered, thus allowing a greater integration and a consequent reduction in the overall size and weight of the receiver.

The multistage amplifier can be a low noise amplifier. It is therefore an advantage that it does not significantly degrade the signal/noise ratio of the receiver, in particular since the input signal is a weak signal.

The multistage amplifier comprises at least two integrated amplification circuits, that is, at least a first and a second amplification stage, which allow to reach the necessary amplification gain level.

According to the invention, the image rejection filter is positioned between the at least two amplification stages. It is an advantage that the filter itself, in this position, distances and isolates, from an electromagnetic point of view, the amplification stages, thus making it unnecessary to use external shielding for the individual integrated circuits. The electronic board comprises at least one dielectric substrate and at least two conductive layers each disposed on a surface of said dielectric substrate, and the image rejection filter is integrated in the electronic board and is defined by cavities made in the dielectric substrate and delimited by a row of metallized connection holes.

According to preferred embodiments, the filter is integrated into the dielectric substrate of the electronic board, according to Substrate Integrated Waveguide (SIW) technology.

According to some embodiments, the image rejection filter consists of a series of cavities, made between two conductive layers separated by a dielectric substrate of the electronic board and delimited by a row of vias, that is, metallized connection holes that extend through the dielectric, which delimit the cavities that define the filter. Therefore, the filter also does not need any external shielding whatsoever.

This solution makes it possible to integrate a microwave receiver, based on commercial integrated circuits, on an electronic board, without using complicated shielding mechanics, saving weight, overall size and cost compared to existing solutions.

This solution allows to obtain a single component, that is, the electronic board, already prepared with the image rejection filter and the amplification stages, possibly customized according to requirements.

In this way, it is possible to keep costs low, since it is not necessary to use dedicated devices, which can be expensive in terms of design and construction.

Reducing the complexity of the design and construction of the device also gives the additional advantage of reducing marketing times (shorter times-to-market).

Furthermore, it is possible to use devices at a consolidated level of technological development, which therefore guarantee higher reliability and the electrical behavior of which has been studied and tested in greater detail.

According to some embodiments, it can be provided that the first amplification stage and the second amplification stage are disposed on the same surface of the electronic board.

According to some variants, at least in the case of a multilayer electronic board, the image rejection filter can be made partly on one layer and partly on the one below, with portions at least partly superimposed on each other, and the first and second amplification stage can be disposed on respective surfaces of the electronic board opposite each other. This conformation allows to reduce the sizes of the receiver and to decrease the parasitic couplings between the amplification stages.

Advantageously, the multilayer support can comprise at least two conductive layers, that is, metal planes which, together with the connection holes, confine the electromagnetic field to the substrate.

It is an advantage that, in this way, the electronic board is without any shields that usually have a non-negligible mass and/or complicated mechanics. This reduces the overall sizes, weight and cost of the microwave receiver compared to existing solutions.

Advantageously, additional metallized connection holes can be made in the electronic board, suitably shaped and/or positioned outside the filter and connected to the circuit ground. In this way, it is possible to increase the isolation between the circuits of the two amplification stages and thus avoid triggering unwanted spurious oscillations.

Coplanar connection lines (Coplanar waveguides - CPW) between the filter and the amplifiers can also be made in the dielectric substrate.

The coplanar connection lines can be exploited to further reduce parasitic couplings due to electromagnetic radiation, improving the isolation between the amplification stages.

Advantageously, the antenna is connected directly to the first amplification stage, without the interposition of an image rejection filter, maximizing the noise performance of the receiver. This prevents the input signal, usually weak, from being further reduced in amplitude due to the attenuation of the filter within the passband, degrading the signal/noise ratio of the receiver.

According to some embodiments, the microwave receiver also comprises, integrated in the electronic board, interfaces suitable to allow the connection with the antenna, obtaining better performance in terms of signal transmission speed and a saving in terms of overall sizes. It also prevents using complicated mechanical support and shielding structures.

Some embodiments described here also concern a transceiver configured to receive and transmit microwave signals, comprising at least one receiver according to the invention and at least one transmitter device.

According to some embodiments, the transmitter comprises an electronic board having at least one dielectric substrate and at least two conductive layers each disposed on a surface of the dielectric substrate, on which a multistage amplifier and an image rejection filter are integrated.

Advantageously, the multistage amplifier comprises at least two integrated amplification circuits, that is, at least a first amplification stage and a second amplification stage, and the image rejection filter is positioned between the at least two amplification stages.

According to the invention, the image rejection filter consists of a series of cavities, made between the two conductive layers separated from the dielectric substrate of the electronic board and delimited by a row of vias, that is, metallized connection holes which extend through the dielectric substrate, which delimit the cavities that define the filter. Therefore, the transmitter's image rejection filter also does not need any external shielding whatsoever.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a block diagram of a microwave receiver according to the invention;
- fig. 2 is a top plan view of a portion of the electronic board of the microwave receiver according to embodiments described here;
- fig. 2a is a schematic section view of an electronic board of a receiver according to embodiments described here;
- fig. 3 is a top plan view of a part of a microwave receiver according to variants of embodiments described here;
- fig. 4 is a section view of part of the electronic board of the microwave receiver of fig. 3a according to section line III-III.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the possible embodiments of the invention, of which one or more examples are shown in the attached drawings. Each example is supplied by way of illustration of the invention and shall not be understood as a limitation thereof. For example, one or more characteristics shown or described insomuch as they are part of one embodiment can be varied or adopted on, or in association with, other embodiments to produce another embodiment. It is understood that the present invention shall include all such modifications and variants.

Embodiments described here using the attached drawings concern a receiver 10, of the microwave type.

The receiver 10 can be a standalone component or it can be integrated in a transceiver device comprising at least one receiver 10 according to the invention and a transmitter device, even of a known type.

The receiver 10, in particular, is configured to receive an input signal, while the transmitter device is configured to transmit an output signal.

The receiver 10 can be, in particular, able to detect electrical signals in the microwave frequency band, for example, but not exclusively, in the frequency bands from 18 to 27 GHz (K band) and from 26.5 to 40 GHz (Ka band).

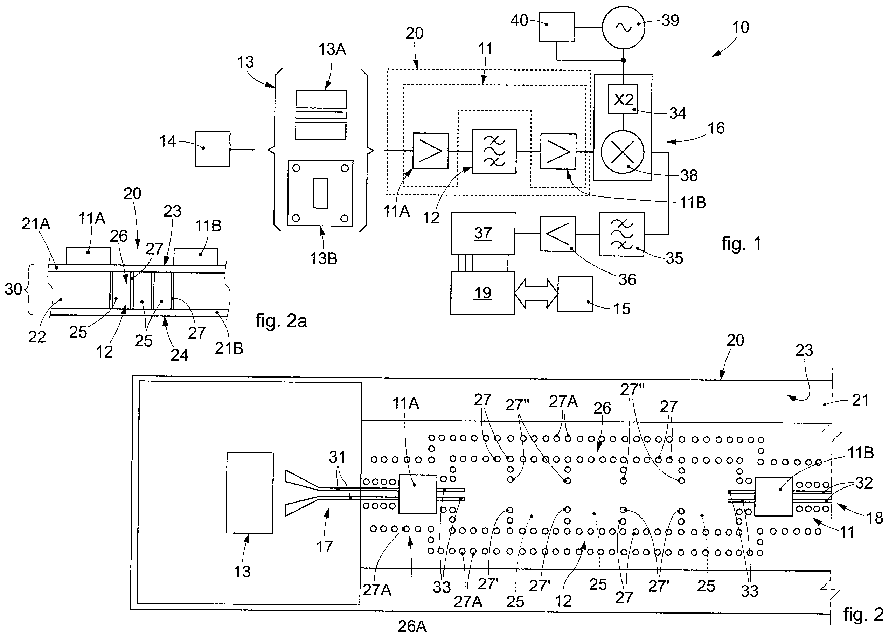

As shown in fig. 1, the receiver 10 can be configured to interface with an antenna 14, on an input side of the signal, and with a user device 15, connected, during use, on an output side of the signal.

The receiver 10 is suitable to be used in radio telecommunication systems with high transmission speed (data rate) such as, for example, satellite radio telecommunication systems on Cubesat platforms, radio telecommunication systems for terrestrial, satellite or 5G base-stations, in satellite microwave radiometers for Cubesats, for microwave sensors and suchlike.

According to some embodiments and as shown in fig. 1, the receiver 10 comprises at least one multistage amplifier 11 configured to amplify the input signal, and an image rejection filter 12.

The image rejection filter 12 has the function of filtering the image spectrum of the input signal received, removing a part thereof.

The receiver 10 also comprises an electronic board 20, on which at least the amplifier 11 and the image rejection filter 12 are disposed.

Preferably, the amplifier 11 and the image rejection filter 12 are integrated in the electronic board 20 forming a single body with it.

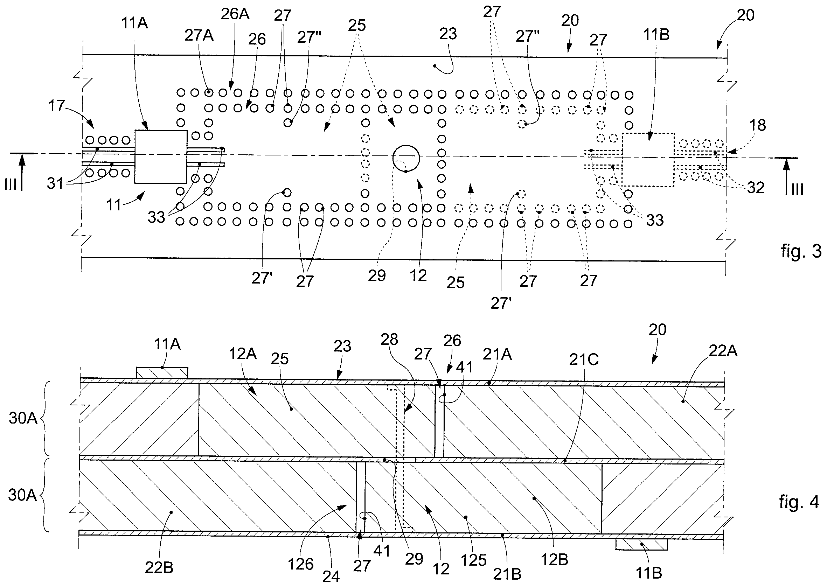

The receiver 10 can comprise an input interface 13 toward the antenna 14 and an impedance matching circuit 17 located between the input interface 13 and the amplifier 11 (figs. 2 and 3). The receiver 10 can be configured to cooperate with input interfaces 13 and impedance matching circuits 17 of different types, as described below.

As shown in fig. 1, the receiver 10 can also comprise a frequency conversion system 16, configured for the shifting, or jump, in frequency of the signals and their filtering.

The receiver 10 can also comprise an impedance matching circuit 18 (figs. 2 and 3) located between the output of the amplifier 11 and the frequency conversion system 16.

According to some embodiments, the frequency conversion system 16 can comprise a mixer 38, a local oscillator 39, a phase-locked loop, or PLL 40.

The receiver can also comprise digital demodulation devices 19 for communication with the user 15.

According to some embodiments, the board 20 can be a single-layer support 30 (figs 2-2a), or a multilayer support comprising two or more layers 30A, 30B (figs. 3-4).

According to some embodiments, the electronic board 20 comprises at least one substrate made of dielectric material 22 and at least two conductive layers 21, for example flat metal elements, or layers of metal material, each disposed on a surface of the substrate made of dielectric material 22.

According to some embodiments, in the case of an electronic board 20 with a single-layer support 30, there are two conductive layers 21 located in correspondence with a first surface 23 and a second surface 24 of the electronic board 20.

According to the embodiment described with reference to fig. 2a, the electronic board 20 comprises a first conductive layer 21A on the first surface 23 and a second conductive layer 21B on the second surface 24.

If the electronic board 20 is a multilayer support, such as for example shown in fig. 4, there can be three or more conductive layers 21A, 21B, 21C, and one or more dielectric substrates 22A, 22B, each located between two conductive layers 21.

According to the embodiment described with reference to fig. 4, the electronic board 20 comprises a first conductive layer 21A on the first surface 23, a second conductive layer 21B on the second surface 24 and a third conductive layer 21C disposed between a first dielectric substrate 22A and a second dielectric substrate 22B.

According to one aspect of the invention, the amplifier comprises at least a first amplification stage 11A and at least a second amplification stage 11B. According to some embodiments, not shown in the drawings, the amplification stages can be more than 2, for example 3 or 4.

In the case of the receiver 10, the direction of the signal in the electronic boards 20 shown in figs. 2-4 will be from left to right, that is, from the first amplification stage 11A toward the second amplification stage 11B.

Preferably, each amplification stage 11A, 11B is an LNA amplifier (Low Noise Amplifier), that is, it has a high gain, suitable to amplify even a weak input signal, and at the same time maintain a low noise level.

The high gain amplifier 11 allows to overcome the power losses caused by the devices normally connected downstream, such as the frequency conversion system 16.

According to some embodiments, the gain of the amplifier 11, and/or of each one of the first stage 11A and the second stage 11B can be greater than or equal to 30 dB.

The two or more amplification stages 11A, 11B can have a noise figure lower than or equal to 3 dB.

The two or more amplification stages 11A, 11B can have the same noise figure, or have different noise figures.

For example, the first stage 11A can have a lower noise figure than the subsequent stage or stages 11B. The two amplification stages 11A, 11B can also have other parameters different from each other, such as for example gain or linearity.

According to some embodiments, the image rejection filter 12 is a band-pass filter able to filter any signals present outside a determinate band of interest.

According to some embodiments, the image rejection filter 12 is positioned between the first 11A and the second amplification stage 11B.

According to some embodiments, the image rejection filter 12 also performs the function of electromagnetically distancing and isolating the amplification stages 11A, 11B with respect to each other.

According to a preferred embodiment of the present invention, the image rejection filter 12 is integrated in the dielectric substrate 22 of the electronic board 20.

In particular, the image rejection filter 12 is made as a waveguide integrated in the dielectric substrate 22, according to the Substrate Integrated Waveguides (SIW) technology.

According to some embodiments, the image rejection filter 12 consists of one or more cavities 25 made in at least one dielectric substrate 22, 22A, 22B enclosed between two conductive layers 21A, 21B, 21C, and delimited by a row 26 of metallized holes 27, or vias (Vertical Interconnect Access) holes made through in the dielectric 22, 22A, 22B.

In other words, the holes 27 have their internal surfaces 41 made of conductive material and create a connection between the respective conductive or metal layers 21A, 21B, 21C located on the two sides of the respective dielectric substrate 22, 22A, 22B.

According to some embodiments, in a plan view, the row 26 has an arbitrary shape, defining the perimeter of the cavities 25, which can be circular, cross-shaped, quadrangular, rectangular, or other.

The conductive layers 21 and the holes 27 are configured to confine the electromagnetic field in the cavity 25 of the dielectric substrate 22, 22A, 22B. Advantageously, in this way, the image rejection filter 12 does not require any further shielding whatsoever, since the electromagnetic field is in fact already shielded by the conductive layers 21 and by the holes 27.

According to some embodiments, the image rejection filter 12 comprises coupling elements 28 between the cavities 25. The coupling elements 28 can be of various kinds, for example of the direct, electric or magnetic type. The coupling elements 28 can be configured to synthesize the desired frequency response. For example, the frequency response can be of the band-pass, high-pass or low-pass type, preferably of the band-pass type.

In particular, by way of a non-limiting example, the coupling elements 28 can comprise one or more of either: apertures between one cavity 25 and the other and/or probes (thread-like elements that enter the cavities to be coupled in order to probe the electric field or the magnetic field) joined by metal elements and/or, if the filter is made using several dielectric substrates 22, 22A, 22B, through apertures 29 made in the common conductive layer 21 (common ground plane) between the cavities 25.

For example, in figs. 2 and 3, the apertures as above, between one cavity 25 and the other, are indicated by the holes 27' and 27" that delimit these apertures.

According to some embodiments, the image rejection filter 12 can be made in one or more layers 30, 30A, 30B of the electronic board 20, in particular in one or more dielectric substrates 22, 22A, 22B.

In the case of an electronic board 20 with a single layer 30, such as for example shown in figs. 2 and 2a, the filter 12 is made in the single dielectric substrate 22 and the first 11A and the second amplification stage 11B can both be disposed on a same surface 23, 24.

Alternatively, it can be provided that the two amplification stages 11A, 11B are respectively disposed on opposite surfaces 23, 24 of the electronic board 20.

If the image rejection filter 12 is made on several layers 30, as shown, for example in figs. 3 and 4, it is made in respective dielectric substrates 22A, 22B of different layers 30A, 30B, respectively defining at least a first part 12A and a second part 12B of the image rejection filter 12.

According to these embodiments, respective rows 26, 126 of holes 27 each delimiting one or more cavities 25, 125 can be provided in the respective dielectric substrates 22, 22A, 22B.

Advantageously, the first part 12A and the second part 12B are at least partly superimposed on each other; in other words, the cavities 25 of one layer 30A are superimposed on the cavities 125 of the other layer 30B. It is therefore possible to reduce the sizes of the receiver 10 and/or further increase the isolation between the amplification stages 11A, 11B. In this case, the rows 26, 126 can be positioned at least partly offset with respect to each other, and have, in a plan view, the same shape, or possibly a different shape.

In this case, shown in figs. 3-4, the amplification stages 11A, 11B can be positioned on opposite surfaces 23, 24 of the electronic board 20.

For example, the first stage 11A can be positioned on the first surface 23, while the second stage 11B can be positioned on the second surface 24.

According to some embodiments, in the case of several layers 30A, 30B, the metal plane 21C disposed between them can comprise one or more through apertures 29 which can act as coupling elements 28 between the first and second parts 12A, 12B of the filter 12, or allow further coupling elements 28 to pass through them.

According to some embodiments, the receiver 10 can comprise other series of metallized connection holes 27A, positioned outside the image rejection filter 12.

According to some embodiments, the other holes 27A define another row 26A outside the row 26 of the first holes 27. This other row 26A can substantially follow the profile of the row 26, or have a suitable profile having a different shape.

Advantageously, the positioning outside the image rejection filter 12 of the other series of holes 27A, together with the shaping of the holes 27A and of the conductive layers 21A, 21B, 21C connected by the holes 27A, allow to increase the isolation between the circuits of the two amplification stages 11A, 11B and thus prevent the triggering of parasitic oscillations.

In particular, by way of a non-limiting example, the pitch, that is, the spacing between the holes 27A, can be controlled as a function of the operating frequency of the filter in order to reduce the radiation of power from the walls of the SIW waveguide; in the same way, the extension of the metal layers 21 with respect to the holes 27A will have to be as small as possible. Finally, there can be provided zones with a high density of holes 27A so as to form barriers for the unwanted signals that propagate through the electronic board 20.

Advantageously, the antenna 14 is connected directly to the first amplification stage 11A, without the intermediation of the image rejection filter, so as to allow a better and more efficient amplification of the input signal before selecting the band of interest.

In this way, the gain and noise performances of the receiver 10 are maximized.

According to some embodiments, the one or more input interfaces 13 can be integrated in the electronic board 20. This allows to further reduce both interference and also additional shielding.

According to alternative forms, not shown in the drawings, the interfaces 13 can be external, and connected to the electronic board 20 by means of mechanical support and shielding structures.

For example, and in a non-exclusive manner, the interfaces 13 can be chosen between a co-planar transmission line 13A and a rectangular waveguide 13B, as shown in fig. 1.

For example, one section of co-planar line 13A can be connected to a coaxial adapter or to a transition, preferably but not exclusively integrated in the electronic board 20, between the co-planar line and the rectangular waveguide.

In the second case, the electronic board 20 can be screwed, through a suitable adapter, onto the waveguide of the antenna 14, by means of the rectangular waveguide interface 13B, thus implementing a hermetic interface.

According to some embodiments, two or more interfaces 13 can also be provided, even of different types, to allow the connection of the receiver 10 to antennas 14 of different types

According to some embodiments, the receiver 10 can comprise one or more connection lines 31 at input to the amplifier 11.

The one or more input connection lines 31 can be able to connect the one or more input interfaces 13 and the first amplification stage 11A. The connection lines 31 can comprise the one or more impedance matching circuits 17.

According to some embodiments, the one or more impedance matching circuits 17 can be configured to match the impedance between the antenna 14 and the first amplification stage 11A.

According to preferred embodiments, the matching circuits 17 can be integrated in the electronic board 20.

According to alternative forms, not shown in the drawings, the matching circuits 17 can be external, and be connected to the electronic board 20 by means of mechanical support and/or shielding structures.

According to some embodiments, the receiver 10 can also comprise one or more connection lines 32 at output from the amplifier 11, in particular from the second amplification stage 11B.

The output connection lines 32 can be able to connect the second amplification stage 11B to the frequency conversion system 16. The output connection lines 32 can comprise one or more impedance matching circuits 18.

According to some embodiments, the one or more impedance matching circuits 18 can be configured to match the impedance between the second amplification stage 11B and the frequency conversion system 16 downstream.

According to preferred embodiments, the matching circuits 18 can be integrated in the electronic board 20.

According to alternative forms, not shown in the drawings, the matching circuits 18 can be external, and be connected to the electronic board 20 by means of mechanical support and/or shielding structures.

According to some embodiments, the receiver 10 also comprises intermediate connection lines 33 between the filter 12 and the amplification stages 11A, 11B.

Advantageously, these intermediate connection lines 33 can be co-planar connection lines so as to reduce parasitic couplings due to phenomena of the irradiated type. Thanks to this approach, it is possible to prevent the triggering of oscillations even in the absence of shields.

The frequency conversion system 16 can be, by way of a non-limiting example, a superheterodyne system. It can also comprise a Software Defined Radio (SDR) system 37.

The frequency conversion system 16 can comprise signal processing circuits and devices such as, as a non-limiting example, frequency converters 34, filters 35, amplification circuits 36, analog/digital conversion circuits and digital signal processing 37, such as an SDR system, and similar or comparable.

The receiver frequency conversion system 16 can be able to send the output signal to the digital demodulation device 19 which communicates with the user device 15.

The communication can comprise, as a non-limiting example, the sending of the output signal toward the user device 15 and/or the reception of signals for the configuration of the receiver 10 by the user device 15.

This digital demodulation device 19 can be, by way of example, a modem, a Field Programmable Gate Array (FPGA) device, or suchlike.

It is clear that modifications and/or additions of parts may be made to the receiver 10 as described heretofore, without departing from the field and scope of the present invention as defined by the claims.

Some embodiments described here also concern a transceiver configured to receive and transmit microwave signals, comprising at least one receiver 10 according to the invention and at least one transmitter device.

According to some embodiments, the transmitter can comprise an electronic board 20 of the type shown in figs. 2-4 and previously described with reference to the receiver 10, on which there are integrated at least one amplifier 11 with two amplification stages 11A, 11B and at least one image rejection filter 12 disposed between the two amplification stages 11A, 11B. In the case of a transmitter, the direction of the signal in the electronic boards 20 shown in figs. 2-4 will be from right to left, that is, from the second amplification stage 11B toward the first amplification stage 11A, and from there toward the antenna 14. In the transmitter device the amplification stage 11A can be the power amplifier.

According to some embodiments, also in the case of the transmitter device, the electronic board 20 can have at least one dielectric substrate 22, 22A, 22B and at least two conductive layers 21, 21A, 21B, 21C each disposed on a surface of the dielectric substrate 22, 22A, 22B and the image rejection filter 12 can consists of a series of cavities 25, 125, made in the at least one dielectric substrate 22, 22A, 22B and delimited by a row 26, 126 of vias, that is, metallized connection holes 27 that extend through the dielectric substrate 22, 22A, 22B between the two conductive layers 21, 21A, 21B, 21C.

It is also clear that, although the present invention has been described with reference to some specific examples, a person of skill in the art shall certainly be able to achieve many other equivalent forms of receiver 10, having the characteristics as set forth in the claims and hence all coming within the field of protection defined thereby.

## Claims

1. Microwave receiver device comprising at least one amplifier (11), an image rejection filter (12) and an electronic board (20) supporting at least said amplifier (11) and said image rejection filter (12), wherein said amplifier (11) comprises at least a first amplification stage (11A) and a second amplification stage (11B) and said image rejection filter (12) is positioned between said first (11A) and said second amplification stage (11B), **characterized in that** said electronic board (20) comprises at least one dielectric substrate (22, 22A, 22B) and at least two conductive layers (21, 21A, 21B, 21C) each disposed on a surface of said dielectric substrate (22, 22A, 22B) and **in that** said image rejection filter (12) is integrated in said electronic board (20) and is defined by cavities (25, 125) made in said at least one dielectric substrate (22; 22A, 22B) and delimited by a row (26, 126) of metallized connection holes (27).

2. Receiver device as in claim 1, wherein said image rejection filter (12) is made as a waveguide integrated in said at least one dielectric substrate (22, 22A, 22B) of said electronic board (20) according to Substrate Integrated Waveguides (SIW) technology.

3. Receiver device as in any claim from 1 to 2, wherein said electronic board (20) is of the multilayer type and includes at least three conductive layers (21A, 21B, 21C) separated by respective dielectric substrates (22A, 22B), wherein each of said dielectric substrates (22A, 22B) comprises respective cavities (25, 125) each delimited by a respective row (26, 126) of metallized connection holes (27), and respectively defining a first part (12A) and a second part (12B) of said image rejection filter (12).

4. Receiver device as in claim 3, wherein said first part (12A) and said second part (12B) of said image rejection filter (12) are at least partly superimposed on each other.

5. Receiver device as in claim 3 or 4, wherein the rows (26, 126) in said dielectric substrates (22A, 22B) are positioned at least partly offset with respect to each other, and have, in a plan view, a different shape and said cavities (25, 125) are at least partly superimposed on each other.

6. Receiver device as in any claim hereinbefore, wherein between said cavities (25, 125) there are coupling elements (28) of the direct, electric or magnetic type.

7. Receiver device as in any claim hereinbefore, wherein said first (11A) and second amplification stages (11B) are disposed on respective opposite surfaces (23, 24) of said electronic board (20).

8. Receiver device as in any claim hereinbefore, wherein said electronic board (20) comprises at least one other row (26A) of metallized holes (27A) having a suitable profile and configured to increase the isolation between said amplification stages (11A, 11B).

9. Receiver device as in any claim hereinbefore, wherein said amplification stages (11A, 11B) are low noise amplifiers.

10. Receiver device as in any claim hereinbefore, comprising an input interface (13), chosen between a co-planar transmission line (13A) or a rectangular waveguide (13B) for the connection with an antenna (14), and possibly an impedance matching circuit (17), wherein at least one of either said input interface (13) or said impedance matching circuit (17) are integrated in said electronic board (20).

11. Receiver device as in any claim hereinbefore, comprising co-planar connection lines (33) between said image rejection filter (12) and said amplification stages (11A, 11B).

12. Transceiver device comprising at least one receiver (10) as in any claim hereinbefore, configured to receive an input signal and a transmitter device configured to transmit an output signal.

13. Transceiver device as in claim 12, wherein the transmitter device comprises an electronic board (20) with at least one dielectric substrate (22, 22A, 22B) and at least two conductive layers (21, 21A, 21B, 21C) each disposed on a surface of said dielectric substrate (22, 22A, 22B), on which there are integrated at least a first amplification stage (11B), a second amplification stage (11A) and an image rejection filter (12) positioned between said first (11B) and said second amplification stage (11A), and said image rejection filter (12) is defined by cavities (25, 125) made in said at least one dielectric substrate (22; 22A, 22B) and delimited by a row (26, 126) of metallized connection holes (27).

## Patentansprüche

1. Mikrowellen-Empfängervorrichtung, umfassend wenigstens einen Leistungsverstärker (11), einen Bildsperrfilter (12) und eine Elektronikplatine (20), auf der der wenigstens eine Leistungsverstärker (11) und der Bildsperrfilter (12) aufgebracht sind, wobei der Leistungsverstärker (11) wenigstens eine erste Leistungsverstärkerstufe (11A) und eine zweite Leistungsverstärkerstufe (11B) umfasst, und wobei der Bildsperrfilter (12) zwischen der ersten (11A) und der zweiten Leistungsverstärkerstufe (11B) positioniert ist, **dadurch gekennzeichnet, dass** die Elektronikplatine (20) wenigstens ein dielektrisches Substrat (22, 22A, 22B) und wenigstens zwei, jeweils auf einer Oberfläche des dielektrischen Substrats (22, 22A, 22B) angeordnete Leiterschichten (21, 21A, 21B, 21C) umfasst, und dass der Bildsperrfilter (12) in die Elektronikplatine (20) integriert ist und durch Hohlräume (25, 125) definiert ist, die wenigstens aus dem wenigstens einen dielektrischen Substrat (22, 22A, 22B) hergestellt sind und mittels einer Reihe (26, 126) aus metallisierten Verbindungslöchern (27) begrenzt sind.

2. Empfängervorrichtung gemäß Anspruch 1, wobei der Bildsperrfilter (12) als ein in dem wenigstens einen dielektrischen Substrat (22, 22A, 22B) der Elektronikplatine (20) gemäß der Substrate-Integrated-Waveguides-(SIW)-Technologie integrierter Hohlleiter ausgebildet ist.

3. Empfängervorrichtung gemäß einem der Ansprüche 1 bis 2, wobei die Elektronikplatine (20) vom Mehrschichten-Typ ist und wenigstens drei Leiterschichten (21A, 21B, 21C) mit einschließt, die durch entsprechende dielektrische Substrate (22A, 22B) getrennt sind, wobei jedes der dielektrischen Substrate (22A, 22B) entsprechende Hohlräume (25, 125) umfasst, wobei jeder durch eine entsprechende Reihe (26, 126) von metallisierten Verbindungslöchern (27) begrenzt ist, und dementsprechend einen ersten Teil (12A) und einen zweiten Teil (12B) definieren.

4. Empfängervorrichtung gemäß Anspruch 3, wobei der erste Teil (12A) und der zweite Teil (12B) des Bildsperrfilters (12) wenigstens teilweise einander überlagernd angeordnet sind.

5. Empfängervorrichtung gemäß Anspruch 3 oder 4, wobei die Reihen (26, 126) in dem dielektrischen Substraten (22A, 22B) wenigstens teilweise beabstandet zueinander angeordnet sind und in ihrer Draufsicht eine unterschiedliche Ausgestaltung haben und wobei sich die Hohlräume (25, 125) wenigstens teilweise überlagern.

6. Empfängervorrichtung gemäß einem der vorhergehenden Ansprüche, wobei zwischen den Hohlräumen (25, 125) Koppelungselemente (28) vom direkten, elektrischen oder magnetischen Typ liegen.

7. Empfängervorrichtung gemäß einem der vorhergehenden Ansprüche, wobei die erste (11A) und die zweite Leistungsverstärkerstufe (11B) auf entsprechenden gegenüberliegenden Oberflächen (23, 24) der Elektronikplatine (20) angeordnet sind.

8. Empfängervorrichtung gemäß einem der vorhergehenden Ansprüche, wobei die Elektronikplatine (20) wenigstens eine weitere Reihe (26A) an metallisierten Löchern (27A) mit einem geeigneten Profil umfasst und derart ausgebildet ist, dass sie die Isolation zwischen den Leistungsverstärkerstufen (11A, 11B) verstärkt.

9. Empfängervorrichtung gemäß einem der vorhergehenden Ansprüche, wobei die Leistungsverstärkerstufen (11A, 11B) rauscharme Verstärker sind.

10. Empfängervorrichtung gemäß einem der vorhergehenden Ansprüche, ferner eine Eingabeschnittstelle (13), ausgewählt aus einer co-planaren Übertragungsleitung (13A) oder einem Rechteck-Hohlleiter (13B) für die Verbindung mit der Antenne (14), und gegebenenfalls eine an die Impendanz angepasste Schaltung (17) umfassend, wobei wenigstens eine aus der Eingangsschnittstelle (13) oder der an die Impendanz angepasste Schaltung (17) in der Elektronikplatine (20) integriert verbaut ist.

11. Empfängervorrichtung gemäß einem der vorhergehenden Ansprüche, umfassend coplanare Verbindungsleitungen (33) zwischen dem Bildsperrfilter (12) und den Leistungsverstärkerstufen (11A, 11B).

12. Sender-Empfängervorrichtung, umfassend wenigstens einen Empfänger (10) gemäß einem der vorhergehenden Ansprüche, ausgestaltet zum Empfang von einem Eingangssignal, und einer Sendevorrichtung, ausgestaltet zum Senden eines Ausgangssignals.

13. Sender-Empfängervorrichtung gemäß Anspruch 12, wobei die Sendevorrichtung eine Elektronikplatine (20) mit wenigstens einem dielektrischen Substrat (22, 22A, 22B) und wenigstens zwei, jeweils auf einer Oberfläche des dielektrischen Substrats (22, 22A, 22B) angeordnete Leiterschichten (21, 21A, 21B, 21C) umfasst, und auf welcher wenigstens eine Leistungsverstärkerstufe (11B), eine zweite Leistungsverstärkerstufe (11A) und ein zwischen der ersten Leistungsverstärkerstufe (11B) und der zweiten Leistungsverstärkerstufe (11A) positionierter Bildsperrfilter (12) integriert sind, und wobei der Bildsperrfilter (12) durch Hohlräume (25, 125) definiert ist, die wenigstens aus dem wenigstens einen dielektrischen Substrat (22, 22A, 22B) hergestellt sind und mittels einer Reihe (26, 126) aus metallisierten Verbindungslöchern (27) begrenzt sind.

## Revendications

1. Dispositif récepteur de micro-ondes comprenant au moins un amplificateur (11), un filtre (12) de réjection d'image et une carte électronique (20) supportant au moins ledit amplificateur (11) et ledit filtre (12) de réjection d'image, ledit amplificateur (11) comprenant au moins un premier étage d'amplification (11A) et un deuxième étage d'amplification (11B) et ledit filtre (12) de réjection d'image étant positionné entre ledit premier (11A) et ledit deuxième (11B) étages d'amplification, **caractérisé en ce que** ladite carte électronique (20) comprend au moins un substrat diélectrique (22, 22A, 22B) et au moins deux couches conductrices (21, 21A, 21B, 21C) disposées chacune sur une surface dudit substrat diélectrique (22, 22A, 22B) et **en ce que** ledit filtre (12) de réjection d'image est intégré dans ladite carte électronique (20) et est défini par des cavités (25, 125) réalisées dans ledit au moins un substrat diélectrique (22 ; 22A, 22B) et délimitées par une rangée (26, 126) de trous de connexion métallisés (27).

2. Dispositif récepteur selon la revendication 1, dans lequel ledit filtre (12) de réjection d'image est réalisé sous forme de guide d'onde intégré dans ledit au moins un substrat diélectrique (22, 22A, 22B) de ladite carte électronique (20) selon la technologie de guides d'ondes intégrés au substrat (*"Substrate Integrated Waveguides",* SIW).

3. Dispositif récepteur selon l'une quelconque des revendications 1 à 2, dans lequel ladite carte électronique (20) est du type multicouche et comprend au moins trois couches conductrices (21A, 21B, 21C) séparées par des substrats diélectriques respectifs (22A, 22B), chacun desdits substrats diélectriques (22A, 22B) comprenant des cavités respectives (25, 125) délimitées chacune par une rangée respective (26, 126) de trous de connexion métallisés (27), et définissant respectivement une première partie (12A) et une deuxième partie (12B) dudit filtre (12) de réjection d'image.

4. Dispositif récepteur selon la revendication 3, dans lequel ladite première partie (12A) et ladite deuxième partie (12B) dudit filtre (12) de réjection d'image sont au moins en partie superposées l'une sur l'autre.

5. Dispositif récepteur selon la revendication 3 ou la revendication 4, dans lequel les rangées (26, 126) dans lesdits substrats diélectriques (22A, 22B) sont positionnées au moins en partie de façon décalée les unes par rapport aux autres, et ont, en vue en plan, une forme différente et lesdites cavités (25, 125) sont au moins en partie superposées les unes aux autres.

6. Dispositif récepteur selon l'une quelconque des revendications précédentes, dans lequel entre lesdites cavités (25, 125) se trouvent des éléments de liaison (28) de type direct, électrique ou magnétique.

7. Dispositif récepteur selon l'une quelconque des revendications précédentes, dans lequel lesdits premier (11A) et deuxième (11B) étages d'amplification sont disposés sur des surfaces opposées respectives (23, 24) de ladite carte électronique (20).

8. Dispositif récepteur selon l'une quelconque des revendications précédentes, dans lequel ladite carte électronique (20) comprend au moins une autre rangée (26A) de trous métallisés (27A) ayant un profil approprié et configurés pour augmenter l'isolation entre lesdits étages d'amplification (11A, 11B).

9. Dispositif récepteur selon l'une quelconque des revendications précédentes, dans lequel lesdits étages d'amplification (11A, 11B) sont des amplificateurs à faible bruit.

10. Dispositif récepteur selon l'une quelconque des revendications précédentes, comprenant une interface d'entrée (13), choisie entre une ligne de transmission coplanaire (13A) ou un guide d'onde rectangulaire (13B) pour la connexion avec une antenne (14), et optionnellement un circuit (17) de concordance d'impédance, au moins une parmi ladite interface d'entrée (13) et ledit circuit (17) de concordance d'impédance étant intégré dans ladite carte électronique (20).

11. Dispositif récepteur selon l'une quelconque des revendications précédentes, comprenant des lignes de connexion coplanaires (33) entre ledit filtre (12) de réjection d'image et lesdits étages d'amplification (11A, 11B).

12. Dispositif émetteur-récepteur comprenant au moins un récepteur (10) selon l'une quelconque des revendications précédentes, configuré pour recevoir un signal d'entrée et un dispositif émetteur configuré pour transmettre un signal de sortie.

13. Dispositif émetteur-récepteur selon la revendication 12, dans lequel le dispositif émetteur comprend une carte électronique (20) avec au moins un substrat diélectrique (22, 22A, 22B) et au moins deux couches conductrices (21, 21A, 21B, 21C) disposées chacune sur une surface dudit substrat diélectrique (22, 22A, 22B), sur laquelle sont intégrés au moins un premier étage d'amplification (11B), un deuxième étage d'amplification (11A) et un filtre (12) de réjection d'image positionné entre ledit premier (11B) et ledit deuxième (11A) étages d'amplification, et ledit filtre (12) de réjection d'image est défini par des cavités (25, 125) pratiquées dans ledit au moins un substrat diélectrique (22 ; 22A, 22B) et délimitées par une rangée (26, 126) de trous de connexion métallisés (27).
